# EUROPÄISCHE PATENTSCHRIFT

(11) **EP 3 999 925 B1**
(45) Veröffentlichungstag und Bekanntmachung des Hinweises auf die Patenterteilung: **25.10.2023**
(21) Anmeldenummer: 20771476.7
(22) Anmeldetag: 02.09.2020
(51) Int. Cl.: G05B 19/418

(54) **VERFAHREN UND VORRICHTUNGEN ZUM BESTIMMEN EINER PRODUKTGÜTE**
METHOD AND DEVICE FOR DETERMINING A PRODUCT QUALITY
PROCÉDÉ ET DISPOSITIFS DE DÉTERMINATION D'UNE QUALITÉ DE PRODUIT

(30) Priorität: 08.10.2019 EP 19201906
(43) Veröffentlichungstag der Anmeldung: 25.05.2022
(73) Patentinhaber: Siemens Aktiengesellschaft, 80333 München (DE)
(72) Erfinder: KLEIN, Daniel, 92280 Kastl (DE); OCHSENFELD, Henning, 90491 Nürnberg (DE); SEUTTER, Tobias, 90403 Nürnberg (DE)
(74) Vertreter: Siemens Patent Attorneys
(86) Internationale Anmeldenummer: PCT/EP2020/074446
(87) Internationale Veröffentlichungsnummer: WO 2021/069150

(56) Entgegenhaltungen:
- US-A1- 2005 071 037
- US-A1- 2013 204 587
- US-B1- 6 281 465
- JAVED M A ET AL: "NEURAL NETWORKS BASED LEARNING AND ADAPTIVE CONTROL FOR MANUFACTURING SYSTEMS", PROCEEDINGS IROS. IEEE/RSJ INTERNATIONAL WORKSHOP ONINTELLIGENT ROBOTS AND SYSTEMS. INTELLIGENCE FOR MECHANICALSYSTEMS, XX, XX, 3. November 1991 (1991-11-03), Seiten 242-246, XP002055118,

## Beschreibung

### Gebiet der Erfindung

Die vorliegende Erfindung betrifft Verfahren und Vorrichtungen zum Bestimmen einer aus einem Fertigungsverfahren hervorgehenden Produktgüte.

### Hintergrund der Erfindung

Industrielle Fertigungsverfahren umfassen in der Regel eine Vielzahl von Einzelfertigungsschritten. Dabei werden entlang des Fertigungsverfahrens qualitätssichernde Maßnahmen benötigt, um sicherzustellen, dass das gefertigte Produkt den Anforderungen entspricht und fehlerfrei eingesetzt werden kann. Die Fertigungsqualität, mit welcher Produkte bzw. einzelne Bauteile und -gruppen gefertigt werden, ist heute bereits auf einem sehr hohen Niveau, auf dem bereits bis zu 99 % FPY (first pass yield) Raten erzielt werden. Dies bedeutet, dass 99 % der gefertigten Produkte fehlerfrei sind.

Diese qualitätssichernden Maßnahmen sind kosten- und zeitaufwändig, da hierfür u.a. Personal benötigt wird sowie Test- und Prüfverfahren (weiter) entwickelt und betrieben werden müssen. Eine Einsparung dieser an sich nicht weitersteigernden Arbeitsschritte würde enorme finanzielle Potentiale eröffnen.

Deshalb wurden bereits Lösungen entwickelt, die solche qualitätssichernden Maßnahmen in Umfang, Komplexität und Zeitaufwand reduzieren und am Ende auch zu einer signifikanten Effizienzsteigerung bei der Fertigung führen können.

Ein vielversprechender Ansatz ist dabei das so genannte "Closed-Loop-Analytics" (CLA). Dabei wird auf Grundlage von Algorithmen, die dem maschinellen Lernen zuzuordnen sind, eine in sich geschlossen Analysekette erzeugt, um am Ende zuverlässige Aussagen über die Qualität des Bauteils machen zu können, ohne dass eine direkte Qualitätsprüfung des Produkts erforderlich ist.

Wesentlicher Ausgangspunkt ist dabei ein Datensatz z.B. über Fertigungszustandsgrößen wie Temperatur, Druck, o.ä., sowie diesen Eingangsdaten zugeordnete Zielgrößen wie z.B. der Verzug eines Bauteils an einer oder mehreren Stellen, der eine Aussage über die Qualität des Bauteils zulässt.

Auf Grundlage dieses Datensatzes ist es möglich, prädiktive Modelle zu erstellen, die es erlauben, rein auf Grundlage der Eingangsdaten eine Vorhersage über die Bauteilqualität zu treffen, wobei z.B. Algorithmen und Methoden aus dem Bereich des maschinellen Lernens zum Einsatz kommen.

Genau dieser Datensatz stellt die Anwender von CLA-Ansätzen jedoch häufig vor folgende Herausforderungen, die bis heute nur unzureichend gelöst sind:
1. Ausreichende Menge an Daten: Häufig sind keine oder nur unzureichende Daten vorhanden, die es erlauben ein aussagekräftiges prädiktives Modell zu generieren. Dies kann beispielsweise daran liegen, dass nicht ausreichend Daten gemessen werden oder dass die Anlage neu in Betrieb geht und damit noch keine Möglichkeit zu Messung vorhanden war. Ohne ausreichende Daten ist es aber nahezu unmöglich ein aussagkräftiges Vorhersagemodell zu erstellen.
2. Qualität der Daten: Um ein aussagekräftiges Modell zu erzeugen, ist es nicht nur zwingend notwendig eine ausreichende Menge an Daten zu haben, sondern auch die Qualität der Daten muss hochwertig sein. Ein sog. "Rauschen" im Datensatz, das heißt die Korrelation zwischen den Eingangsdaten (z.B. Temperatur, Druck) und den Ausgangsdaten (z.B. Verzug eines Blechs an einer bestimmten Stelle) ist nicht immer eindeutig, kann sich beispielsweise auch in einem qualitativ schlechten Modell widerspiegeln. Darüber hinaus kann es gerade bei Fertigungsverfahren, die ohnehin bereits einen sehr hohen Qualitätsstandard bieten, zu Problemen beim prädiktiven Modell kommen. Ein solches Modell muss nämlich auch sog. "Ausreißer" oder Fertigungsabweichungen, die zu Qualitätsproblemen führen, sicher erkennen. Diese sind aber in der Regel eine Ausnahme im Datensatz und werden von einem prädiktiven Modell nur unzureichend erfasst. Gerade wenn wiederverwendbare Prädiktionsmodelle für Kunden mit gleichen oder ähnlichen Fertigungsverfahren entwickelt werden sollen, kann dies zum Problem werden, denn bei verschiedenen Anwendern kann es zu unterschiedlichen Parameterkonstellationen kommen.
3. Nicht messbare Größen: Nicht immer sind alle Fertigungszustandsgrößen, die maßgeblichen Einfluss auf die Bauteilqualität haben, auch messbar. Dies kann z.B. die mechanische Spannung in einem Tiefziehbauteil während des Pressvorgangs im Werkzeug sein oder aber die Temperatur in der Mitte eines Gussbauteils. In beiden Fällen wäre eine Messung nahezu unmöglich oder zumindest sehr schwierig, die Qualität eines Bauteils könnte aber mit dem Wissen dieser Größen sehr gut prognostiziert werden.
4. Dauer der Anlernphase: Gerade wenn bei einer Fertigungslinie zuvor kaum Daten verfügbar sind oder diese neu gebaut wird, kann es sehr lange (bis zu mehreren Monaten) dauern, bis ein ausreichender Datensatz vorhanden ist, um ein zuverlässiges prädiktives Modell zu erzeugen. Zudem kann es bei einer produktiven Anlage zu Änderungen im Aufbau kommen, was wiederum den Aufbau eines neuen Datensatzes erforderlich macht.

Bisherige Ansätze zum Bestimmen der Produktgüte lassen sich grob in folgende Bereiche gliedern:

### 1. Datenbasierte Qualitätsprüfung

Wie eingangs beschrieben besteht die Möglichkeit eine sogenannte datenbasierte Qualitätsprüfung auf Grundlage von Fertigungsdaten und prädiktivem Modell zu machen. Das prädiktive Modell kann dabei über unterschiedliche Verfahren und Methoden generiert werden, die meist dem sogenannten Maschinellen Lernen zuzuordnen sind. Das jeweilige prädiktive Modell steht allerdings erst nach der zugehörigen Lernphase zur Verfügung.

### 2. Direkte Qualitätsprüfung

Es ist möglich, spezielle Maschinen und Einrichtungen einzusetzen, die eine Qualitätsprüfung erlauben. So können beispielsweise Lötstellen über Röntgenaufnahmen kontrolliert werden oder es findet nach einem Tiefziehprozess eine Verzugsmessung über Bildaufnahmen oder auch Lasermessung statt. Solche Einrichtungen gibt es in zahlreichen unterschiedlichen Ausprägungen mit dem häufigen Nachteil, dass sie sehr kostenintensiv sind und oftmals die Produktion verlangsamen.

### 3. Prozesssimulation

Es gibt zahlreiche unterschiedliche Möglichkeiten Fertigungsverfahren zu simulieren und die wesentlichen Einflüsse digital zu untersuchen. Solche Prozesssimulationen sind in vielen Fertigungsbereichen, wie z.B. dem Umformen üblich und werden intensiv bei der Prozessentwicklung eingesetzt. Diese Simulationstechnologien sind bereits derart fortgeschritten, dass bestimmte Prozesse mit sehr hoher Genauigkeit simuliert werden können (z. T. < 5% Abweichung). Damit ist es möglich, computerimplementierte Verfahren zu entwickeln, zu optimieren und alle relevanten Aspekte zu betrachten, die einen Einfluss haben. Allerdings erfordert dieses Maß an Genauigkeit sehr genau modellierte und damit sehr komplexe Simulationsmodelle, die nicht annähernd in Echtzeit berechenbar sind.

Aus der US Patentschrift US 6281465 B1 ist eine Vorrichtung zur prädiktiven Diagnose der aktuellen Güte des technischen Arbeitsergebnisses einer technischen Anlage, insbesondere der aktuellen Güte der Schweißpunkte eines Punktschweißroboters bekannt geworden. Dabei werden die erfassten Messwertesätze zum einen einem Anlagenmodell und zum anderen einer zumindest zur Parametrierung des Anlagenmodells dienenden Vorrichtung zugeführt.

Aus der US Offenlegungsschrift US 2005071037 A1 ist ein Verfahren zum Analysieren eines Prozesses, der von einem Halbleiterverarbeitungswerkzeug durchgeführt wird bekannt geworden. Dort wird ein Prozess zum Verwenden von First-Principles-Simulationstechniken gezeigt, um virtuelle Sensormesswerte bereitzustellen, die einen Prozess erleichtern können, der von einem Halbleiterverarbeitungswerkzeug durchgeführt wird.

### Zusammenfassung der Erfindung

Die zu lösende Aufgabe besteht also darin, bereits zur Inbetriebnahme von Fertigungsverfahren wirksame qualitätssichernde Maßnahmen bereitzustellen.

Diese Aufgabe wird durch die Merkmale der unabhängigen Patentansprüche betreffend ein Verfahren und eine Vorrichtung gelöst. Die Merkmale der abhängigen Patentansprüche definieren bevorzugte und/oder vorteilhafte Ausführungsformen.

Das simulative Bestimmen gemäß dem Verfahren kann ein Ausführen einer Systemsimulation des Fertigungsverfahrens umfassen.

Das Verfahren kann ferner ein simulatives Erfassen einer sensorisch nicht erfassbaren der Fertigungszustandsgrößen in Abhängigkeit von der sensorisch erfassten der Fertigungszustandsgrößen umfassen.

Das simulative Erfassen kann ein Ausführen einer hinsichtlich einer Rechenkomplexität vereinfachten Instanz der Systemsimulation und/oder einer analytischen Gleichung umfassen.

Die Systemsimulation kann in Abhängigkeit von der streuenden der Fertigungszustandsgrößen parametrisiert sein.

Die Systemsimulation kann eine kontinuierliche Simulation, eine eindimensionale Simulation und/oder eine analytische Gleichung umfassen.

Die kontinuierliche Simulation kann eine Finite-Elemente-Methode, eine Methode der numerischen Strömungsmechanik und/oder eine Mehrkörpersimulation umfassen.

Das simulative Bestimmen kann ein Abtasten eines Wertebereiches der streuenden der Fertigungszustandsgrößen umfassen.

Das Abtasten kann ein Ausführen einer Methode einer statistischen Versuchsplanung umfassen.

Die Methode der statistischen Versuchsplanung kann eine Monte Carlo-Abtastung und/oder eine Latin-Hypercube-Abtastung umfassen.

Die Methode des maschinellen Lernens kann einen Entscheidungsbaum und/oder ein künstliches neuronales Netz umfassen.

Das Verfahren kann ferner ein Separieren des Produkts in Abhängigkeit von dessen bestimmter Produktgüte umfassen.

Die Vorrichtung kann ferner dazu eingerichtet sein, das Verfahren nach Ausführungsbeispielen durchzuführen.

Die Vorrichtung kann ferner eine simulative Erfassungseinrichtung zum simulativen Erfassen einer sensorisch nicht erfassbaren der Fertigungszustandsgrößen in Abhängigkeit von der sensorisch erfassten der Fertigungszustandsgrößen umfassen.

Die Vorrichtung kann ferner eine Separationseinrichtung zum Separieren des Produkts in Abhängigkeit von dessen bestimmter Produktgüte umfassen.

### Kurze Beschreibung der Figuren

Die Erfindung wird nachfolgend anhand bevorzugter Ausführungsformen und unter Bezugnahme auf die Zeichnungen kurz erläutert, wobei gleiche Bezugszeichen gleiche oder ähnliche Elemente bezeichnen.
- FIG 1: zeigt schematisch einen prädiktiven qualitätssichernden "Closed-Loop-Analytics" (CLA)-Ansatz in Übereinstimmung mit einem Beispiel aus dem Stand der Technik.
- FIG 2: zeigt schematisch ein Verfahren zum Bestimmen einer aus einem Fertigungsverfahren hervorgehenden Produktgüte in Übereinstimmung mit Ausführungsbeispielen der Erfindung.
- FIG 3: zeigt schematisch ein Abtasten eines Wertebereiches von streuenden der Fertigungszustandsgrößen in Übereinstimmung mit einem Ausführungsbeispiel der Erfindung.
- FIG 4: zeigt schematisch eine Vorrichtung zum Bestimmen einer aus einem Fertigungsverfahren hervorgehenden Produktgüte in Übereinstimmung mit Ausführungsbeispielen der Erfindung.

### Detaillierte Beschreibung von Ausführungsbeispielen

Die Erfindung wird nachfolgend anhand bevorzugter Ausführungsformen und unter Bezugnahme auf die Zeichnungen näher erläutert.

Eine Beschreibung von Ausführungsbeispielen in spezifischen Anwendungsfeldern bedeutet keine Einschränkung auf diese Anwendungsfelder.

Elemente schematischer Darstellungen sind nicht notwendigerweise maßstabsgetreu wiedergegeben, sondern vielmehr derart, dass dem Fachmann ihre Funktion und ihr Zweck verständlich werden.

Soweit nicht ausdrücklich anders angegeben sind die Merkmale der verschiedenen Ausführungsformen miteinander kombinierbar.

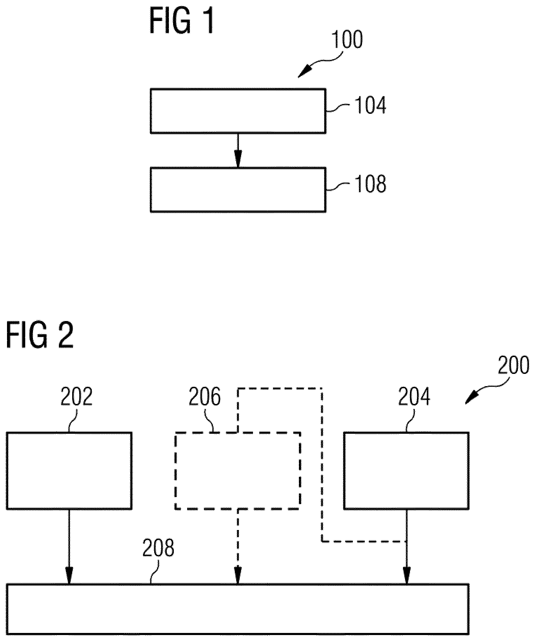

FIG 1 zeigt schematisch einen prädiktiven qualitätssichernden "Closed-Loop-Analytics"-Ansatz 100 in Übereinstimmung mit einem Beispiel aus dem Stand der Technik.

In der FIG 1 ist ein reales Fertigungsverfahren 104 für ein Produkt dargestellt. Diesem Fertigungsverfahren 104 lassen sich sensorisch erfassbare Fertigungszustandsgrößen X_{SEN} ∈ X wie Temperatur, Druck, o. ä. entnehmen. Die Fertigungszustandsgrößen X werden auf Grundlage eines prädiktiven Modells 108 in einen zentralen Leistungsindikator ("*key performance indicator*", KPI) umgesetzt, der eine Aussage über eine Qualität des gefertigten Produkts ermöglicht. Insbesondere kann es sich hierbei um eine Produktgüte Q handeln.

Unter Fertigungsverfahren können Verfahren zum Herstellen eines Produkts, wie etwa eines Bauteils oder einer Baugruppe, verstanden werden.

Unter einem Produkt kann vor Abschluss des Fertigungsverfahrens ein zu fertigendes Produkt, und nach Abschluss des Fertigungsverfahrens das gefertigte Produkt verstanden werden.

Unter Fertigungszustandsgrößen können insbesondere solche physikalischen Zustandsgrößen verstanden werden, die sich im Verlauf des realen Fertigungsverfahrens 104 an oder in dem zu fertigenden Produkt einstellen oder in der Fertigungsmaschine einstellen lassen. Beispiele umfassen Temperatur, Druck, Presskraft, Blechposition, o.ä..

Unter prädiktiv kann verstanden werden, dass eine Vorhersage erfolgt.

Unter einem prädiktiven Modell kann ein Modell verstanden werden, das eine Vorhersage ermöglicht.

Unter "Closed-Loop-Analytics" kann verstanden werden, dass ein prädiktives Modell 108 bereitgestellt wird, welches auf Grundlage von Fertigungszustandsgrößen X zuverlässige Aussagen über eine Güte Q des gefertigten Bauteils machen kann, ohne dass eine direkte Qualitätsprüfung des Bauteils erforderlich ist, und - nicht in FIG 1 dargestellt - dass diese Güte Q an das reale Fertigungsverfahren 104 zurückgemeldet wird.

Ausgangspunkt ist dabei ein Datensatz z.B. über Fertigungszustandsgrößen X wie Temperatur, Druck, o.ä., sowie diesen Eingangsdaten zugeordnete Zielgrößen unter den Fertigungszustandsgrößen X wie z.B. der Verzug eines Bauteils an einer oder mehreren Stellen, der eine Aussage über die Güte Q des Bauteils zulässt.

Auf Grundlage dieses Datensatzes ist es möglich, prädiktive Modelle 108 zu erstellen, die es erlauben rein auf Grundlage der Eingangsdaten eine Vorhersage über die Güte Q des Bauteils zu treffen, wobei z.B. Algorithmen und Methoden aus dem Bereich des maschinellen Lernens zum Einsatz kommen.

Genau dieser Datensatz stellt Anwender von CLA-Ansätzen jedoch häufig vor die bereits zuvor erwähnten, bis heute nur unzureichend gelösten Herausforderungen.

FIG 2 zeigt schematisch ein Verfahren 200 zum Bestimmen einer aus einem Fertigungsverfahren 104 hervorgehenden Produktgüte Q in Übereinstimmung mit Ausführungsbeispielen der Erfindung.

Das Verfahren 200 ist mehrschrittig konzipiert:
In Schritt 202 erfolgt ein simulatives Bestimmen 202 einer von mehreren Fertigungszustandsgrößen X_{SIM} ∈ X in Abhängigkeit von einer streuenden der Fertigungszustandsgrößen X.

Die mehreren Fertigungszustandsgrößen X können etwa Temperatur, Druck, Presskraft, Blechposition, o. ä. ggf. an verschiedenen Positionen umfassen. Diese bilden Eingangsgrößen für das nachfolgend näher erläuterte assoziative Bestimmen 208.

Die streuenden der Fertigungszustandsgrößen X können insbesondere im realen Fertigungsverfahren 104 streuende Eingangsgrößen, etwa Presskraft, Blechposition, usw., sein. Diese sind für Abweichungen bestimmter Qualitätsparameter maßgeblich. Beispielsweise können eine abweichende Anpresskraft und eine leicht abweichende Temperatur am Ende zum Verzug des Produkts führen.

Unter streuend kann insbesondere von einem Mittelwert abweichend verstanden werden. Eine Abweichung kann z.B. für verschiedene nacheinander erfolgende Fertigungsvorgänge oder für verschiedene Fertigungsschritte vorliegen. Die Abweichung kann als Funktion der Zeit auftreten.

In Schritt 204 erfolgt ein sensorisches Erfassen 204 einer der Fertigungszustandsgrößen X_{SEN} ∈ X.

Wie bereits erwähnt lassen sich dem Fertigungsverfahren 104 sensorisch erfassbare Fertigungszustandsgrößen X_{SEN} ∈ X wie Temperatur, Druck, o. ä. entnehmen. Auch diese gehen als Eingangsgrößen in das assoziative Bestimmen 208 ein.

Unter sensorisch erfassbar kann mittels Sensoren erfassbar und insbesondere mittels Sensoren mit vertretbarem Aufwand erfassbar verstanden werden.

In Schritt 208 erfolgt ein assoziatives Bestimmen 208 der Produktgüte Q in Abhängigkeit von den Fertigungszustandsgrö-ßen X.

Unter assoziativ kann insbesondere eine Assoziation zwischen Eingangs- und Ausgangsmustern herstellend verstanden werden. Mit anderen Worten wird eine Gesamtheit aller bestimmten oder erfassten Fertigungszustandsgrößen X auf Grundlage eines prädiktiven Modells 108, 408 mit einer Produktgüte Q des gefertigten Produkts verbunden bzw. verknüpft.

Das prädiktive Modell 108, 408 soll dabei aus beispielhaften Beobachtungen (Fertigungszustandsgrößen X) verallgemeinerte Gesetzmäßigkeiten (Produktgüte Q) ableiten.

Vorteilhaft erlaubt das Verfahren aufgrund seines allgemein anwendbaren Ansatzes, dem prädiktiven Modell 108, 408 alle verfügbaren Fertigungszustandsgrößen X zuzuführen, grundsätzlich wiederverwendbare prädiktive Modelle 108, 408 für Kunden mit gleichen oder ähnlichen Fertigungsverfahren 104 zu entwerfen.

Das simulative Bestimmen 202 kann ein Ausführen einer Systemsimulation des Fertigungsverfahrens 104 umfassen.

Unter einer Systemsimulation kann insbesondere eine vollumfängliche Prozesssimulation eines Fertigungsverfahrens für ein Produkt verstanden werden.

Es gibt verschiedene Möglichkeiten, das Fertigungsverfahren 104 zu simulieren und die wesentlichen Einflüsse digital zu untersuchen. Solche Prozesssimulationen sind in vielen Fertigungsbereichen wie z.B. dem Umformen üblich und werden intensiv bei der Prozessentwicklung eingesetzt.

Zwar ist eine Simulation immer nur eine Annäherung an die Realität auf Grundlage diverser Annahmen. Dies führt dazu, dass das Ergebnis einer Simulation nicht exakt der Realität entspricht und abweichungsbehaftet ist. Z.B. kann es sein, dass bei einer zu groben Vernetzung Konturelemente oder Rundungen im Bauteil nur unzureichend berücksichtigt werden. Bei einer fachgerechten Anwendung der Simulationsmethoden ist es jedoch möglich die Abweichungen zur Realität gering zu halten. Es ist dabei durchaus nicht unüblich, dass ein einziger Durchlauf einer Systemsimulation mehrere Stunden in Anspruch nimmt. Demzufolge bietet es sich an, das simulative Bestimmen 202 insbesondere vor dem eigentlichen Fertigungsverfahren 104 durchzuführen. Die in Frage kommenden Simulationstechniken sind derart fortgeschritten, dass bestimmte Fertigungsverfahren 104 mit sehr hoher Genauigkeit simuliert werden können (z.T. < 5 % Abweichung).

Demzufolge ist es möglich, auf Grundlage eines simulativen Bestimmens 202 die Einflüsse beliebiger Fertigungszustandsgrößen X auf die Produktqualität Q zu untersuchen.

Dies ist dabei in einem weit größeren Umfang möglich als in der Realität, denn es stehen erheblich mehr Fertigungszustandsgrößen X zu Verfügung, die für das gesamte Bauteil ausgewertet werden können. Es sind nämlich nicht immer alle Fertigungszustandsgrößen, die maßgeblichen Einfluss auf die Produktgüte Q haben, auch messbar. Dies kann z.B. die mechanische Spannung in einem Tiefziehbauteil während des Pressvorgangs im Werkzeug sein oder aber die Temperatur in der Mitte eines Gussbauteils. In beiden Fällen wäre eine Messung nahezu unmöglich oder zumindest sehr schwierig, die Qualität Q des Produkts könnte aber mit dem Wissen dieser Größen sehr gut prognostiziert werden.

Damit wird es möglich, Fertigungsverfahren 104 am Rechner zu entwickeln, zu optimieren und alle relevanten Aspekte zu betrachten, die einen Einfluss auf die Produktgüte Q haben.

Ferner kann eine Detailtiefe betrachtet werden, die am realen Bauteil unmöglich wäre.

Zudem können schnell und einfach Parametervariationen an den Eingangsgrößen unter den Fertigungszustandsgrößen X durchgeführt werden (z.B. Änderung der Prozesskräfte, leichte Geometrieänderung, kleine Variation der Materialeigenschaften).

Außerdem können solche Parameteränderungen automatisiert vollzogen werden, sodass recht schnell große Datensätze generiert werden können.

Gerade wenn bei einer Fertigungslinie zuvor kaum Daten verfügbar sind oder diese neu gebaut wird, kann es sehr lange (bis zu mehreren Monaten) dauern, bis ein ausreichender Datensatz vorhanden ist, um ein zuverlässiges prädiktives Modell zu erzeugen. Zudem kann es bei einer produktiven Anlage zu Änderungen im Aufbau kommen, was wiederum den Aufbau eines neuen Datensatzes erforderlich macht.

Vorteilhaft erlaubt das Verfahren also auch in Fällen, in denen nicht ausreichend Daten gemessen werden oder der Fertigungsverfahren 104 neu in Betrieb geht und damit noch keine Möglichkeit zur Messung vorhanden war, ein aussagekräftiges prädiktives Modell zu generieren.

Vorteilhaft erlauben die erheblich zahlreicheren Fertigungszustandsgrößen X und die verbesserte Detailtiefe insbesondere in Fällen, in denen die Qualität der Daten hochwertig sein muss, eine Korrelation zwischen den Eingangsdaten und den Zieldaten zu verbessern und so eine Aussagekraft des prädiktiven Modells 108, 408 zu verbessern. Zudem werden sog. "Ausreißer" oder Fertigungsabweichungen, die zu Qualitätsproblemen führen, sicherer erkannt. So lassen sich insbesondere wiederverwendbare prädiktive Modelle 108, 408 für Kunden mit gleichen oder ähnlichen Fertigungsverfahren 104 entwickeln.

Das Verfahren 200 kann ferner einen optionalen Verfahrensschritt aufweisen:
Wie in FIG 2 mit gestrichelten Linien angedeutet ist, kann das Verfahren 200 ein simulatives Erfassen 206 einer sensorisch nicht erfassbaren X_{VSEN} der Fertigungszustandsgrößen X in Abhängigkeit von der sensorisch erfassten X_{SEN} der Fertigungszustandsgrößen X umfassen.

Unter sensorisch nicht erfassbar kann mittels Sensoren nicht erfassbar und insbesondere mittels Sensoren nicht mit vertretbarem Aufwand erfassbar verstanden werden.

Dieser Schritt kann insbesondere zwischen den Schritten des sensorischen Erfassens 204 und des assoziativen Bestimmen 208 erfolgen. Das sensorische Erfassen 204 wird wegen der Abhängigkeit von der sensorisch erfassten X_{SEN} der Fertigungszustandsgrößen X vorausgesetzt, und das assoziative Bestimmen 208 folgt, weil das simulative Erfassen 206 weitere, sensorisch nicht erfassbare X_{SEN} Fertigungszustandsgrößen X hinzufügen kann, in deren Abhängigkeit das assoziative Bestimmen 208 der Produktgüte Q erfolgen soll.

Das simulative Erfassen 206 kann ein Ausführen einer hinsichtlich einer Rechenkomplexität vereinfachten Instanz der Systemsimulation und/oder einer analytischen Gleichung umfassen.

Unter Rechenkomplexität kann ein Ausmaß eines zum Durchführen eines Algorithmus erforderlichen Ressourcenaufwands verstanden werden.

Unter einer analytischen Gleichung kann eine in mathematisch geschlossener Form vorliegende Abbildung verstanden werden. Eine Systemsimulation des Fertigungsverfahrens 104 erfordert bei hinreichender Genauigkeit eine lange Rechenzeit, sodass ein Echtzeit-Betrieb in der Regel nicht oder nur in sehr seltenen Ausnahmen möglich ist.

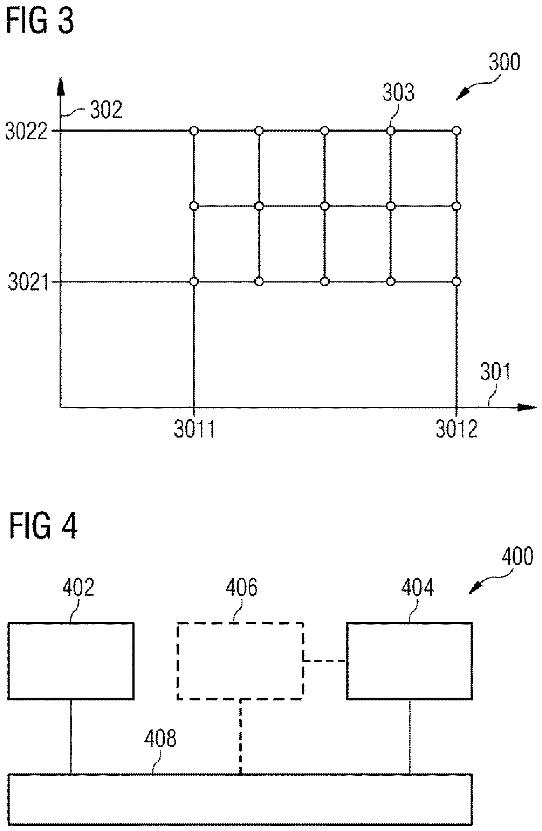

Hier können sogenannte virtuelle Sensoren 406 helfen (vgl. FIG 4), die nur Teile des Systemsimulationsmodells oder vereinfachte Systemsimulationsmodelle umfassen. Zusätzlich oder alternativ können auch analytische Gleichungen einbezogen werden, welchen ja ebenfalls eine Modellbildung zugrunde liegt.

Diese virtuellen Sensoren 406 können dann parallel zum realen Fertigungsverfahren 104 betrieben werden und ermöglichen es auf Grundlage des verkleinerten/vereinfachten Simulationsmodells, den Datensatz der Fertigungszustandsgrößen X in Abhängigkeit von den im realen Fertigungsverfahren 104 sensorisch erfassten Fertigungszustandsgrößen X_{SEN ∈} X mit sensorisch nicht erfassbaren Fertigungszustandsgrößen X_{VSEN ∈} X zu ergänzen.

Vorteilhaft erlaubt es diese Ergänzung der verfügbaren Fertigungszustandsgrößen X ebenfalls, eine Korrelation zwischen den Eingangsdaten und den Zieldaten zu verbessern und so eine Aussagekraft des prädiktiven Modells 108, 408 zu verbessern.

Die Systemsimulation kann in Abhängigkeit von der streuenden der Fertigungszustandsgrößen X parametrisiert sein.

Vorteilhaft bewirkt eine Parametrisierung der Systemsimulation bezüglich der streuenden Fertigungszustandsgrößen, dass alle im realen Fertigungsverfahren 104 streuenden Eingangsgrößen (z.B. Presskraft, Blechposition, etc.) auch im Simulationsmodell variabel sind, sodass eine Untersuchung von Abweichungseffekten auf bestimmte Qualitätsparameter möglich ist. Beispielsweise können eine abweichende Anpresskraft und eine leicht abweichende Temperatur am Ende zum Verzug des Produkts führen. Dadurch lassen sich schnell und einfach Parametervariationen an den Eingangsgrößen unter den Fertigungszustandsgrößen X durchführen (z.B. Änderung der Prozesskräfte, leichte Geometrieänderung, kleine Variation der Materialeigenschaften). Außerdem können solche Parameteränderungen automatisiert vollzogen werden, sodass recht schnell gro-ße Datensätze bezüglich der Fertigungszustandsgrößen X generiert werden können.

Die Systemsimulation kann eine kontinuierliche Simulation, eine eindimensionale Simulation und/oder eine analytische Gleichung umfassen.

Unter kontinuierlicher Simulation können Simulationen verstanden werden, deren zugrundeliegende Modelle das modellierte System mittels Differentialgleichungen beschreiben.

Unter eindimensionaler (1D-)Simulation können Simulationen verstanden werden, deren zugrundeliegende Modelle eine Auswirkung einzelner Einflussgrößen auf das modellierte System beschreiben und daher mit einem angepasstem Modellierungsaufwand, hocheffizienten Berechnungen und kurzen Rechenzeiten einhergehen. Beispielsweise können 1D-Simulationen auf Grundlage von kommerziellen Softwarepaketen wie etwa Simulink^{(R)} bereitgestellt werden.

Die kontinuierliche Simulation kann eine Finite-Elemente-Methode, eine Methode der numerischen Strömungsmechanik und/oder eine Mehrkörpersimulation umfassen.

In Abhängigkeit vom jeweiligen Fertigungsverfahren können unterschiedliche Arten der kontinuierlichen Simulation zum Einsatz kommen. Am häufigsten handelt es sich um Finite-Elemente-Methoden (Finite Element Method, FEM), welche in der Regel bei Fertigungsverfahren eingesetzt werden, in denen Festkörper involviert sind, z.B. beim Umformen. Methoden der numerischen Strömungsmechanik (Computational Fluid Dynamics, CFD) kommen bei Strömungsvorgängen zum Einsatz. Eine Mehrkörpersimulation (Multi Body Dynamics, MBD) befasst sich mit großen Starrkörperbewegungen. Ebenso sind Kombinationen dieser Verfahren möglich. Grundsätzlich ist aber allen Verfahren zur Simulation von kontinuierlichen Fertigungsverfahren gemein, dass (partielle) Differentialgleichungen formuliert werden, um den Zusammenhang zwischen diversen physikalischen (Fertigungs-)Zustandsgrößen zu beschreiben.

Das assoziative Bestimmen 208 umfasst ein Ausführen einer Methode eines maschinellen Lernens.

Unter maschinellem Lernen kann ein Aufbau von Erfahrung (Lernen aus Beispielen) und ein Verallgemeinern dieser Erfahrung verstanden werden.

Insbesondere kann diese Erfahrung in Form eines statistischen Modells aufgebaut werden, welches auf Trainingsdaten (den Beispielen) beruht und Muster und Gesetzmäßigkeiten in diesen Trainingsdaten erkennt.

Vorteilhaft bewirkt der Aufbau von Erfahrung, dass danach im Wege eines Lerntransfers auch unbekannte Daten (Beispiele) beurteilbar sind (Verallgemeinerung).

Die Methode des maschinellen Lernens kann einen Entscheidungsbaum und/oder ein künstliches neuronales Netz umfassen.

Entscheidungsbäume sind geordnete, gerichtete Baumstrukturen, die der Darstellung von hierarchisch aufeinanderfolgenden Entscheidungsregeln dienen. Entscheidungsbäume umfassen immer einen Wurzelknoten, beliebig vielen innere Knoten, die für logische Regeln stehen, sowie mindestens zwei Blätter, die eine Antwort auf das Entscheidungsproblem repräsentieren. Im Zusammenhang mit maschinellem Lernen sind Entscheidungsbäume insbesondere für automatische Klassifikationen einsetzbar.

Künstliche neuronale Netze (KNN) sind Netze aus künstlichen Neuronen. Ein KNN weist eine Topologie/Netzstruktur auf, die definiert, wie viele künstliche Neuronen sich auf wie vielen Schichten befinden, und welche künstlichen Neuronen aus welchen aufeinanderfolgenden Schichten miteinander verbunden sind. Ein KNN umfasst stets eine Ausgabeschicht, die ein Ausgangsmuster des KNN bereitstellt, und kann eine oder mehrere verdeckte Schichten umfassen (sog. mehrschichtige Netze). Eine Beurteilung von Eingangsmustern erfolgt in der Regel dadurch, dass diese sich gemäß der Topologie durch das KNN zur Ausgabeschicht hin fortpflanzen. Dabei sind die Daten zwischen aufeinanderfolgenden Schichten einer Gewichtung unterworfen, welche spezifisch ist für das jeweils an der Weitergabe beteiligte Paar von künstlichen Neuronen aus den aufeinanderfolgenden Schichten. Neben anderen Einflussgrößen repräsentieren insbesondere diese Gewichte die Erfahrung des KNN. Geeignete Lernverfahren dienen dazu, diese Erfahrung aufzubauen, d.h. das KNN dazu zu bringen, für bestimmte Eingangsmuster gewünschte Ausgangsmuster bereitzustellen. Ziel bei einem der Lernverfahren, dem überwachten / beobachteten Lernen, ist es, das KNN nach einer Reihe von Beispielen mit unterschiedlichen Eingangs- und Ausgangsmustern dazu zu befähigen, Assoziationen zwischen den Eingangs- und Ausgangsmustern herzustellen.

FIG 3 zeigt schematisch ein Abtasten 300 eines Wertebereiches von streuenden der Fertigungszustandsgrößen X in Übereinstimmung mit einem Ausführungsbeispiel der Erfindung.

Das simulative Bestimmen 202 kann das Abtasten 300 des Wertebereiches der streuenden der Fertigungszustandsgrößen X umfassen.

In dem Beispiel der FIG 3 erfolgt das Abtasten 300 des Wertebereiches von zwei streuenden der Fertigungszustandsgrößen X, etwa eines horizontal aufgetragenen Anpressdrucks 301, dessen vorgegebener Wertebereich sich von einer Untergrenze 3011 bis zu einer Obergrenze 3012 erstreckt, sowie einer vertikal aufgetragenen Temperatur 302, deren vorgegebener Wertebereich sich von einer Untergrenze 3021 bis zu einer Obergrenze 3022 erstreckt. Die Wertebereiche der beiden streuenden der Fertigungszustandsgrößen X spannen zusammen einen Parameterraum auf, der in gewissen, für die streuenden der Fertigungszustandsgrößen X jeweils vorgegebenen Abständen abzutasten ist.

In dem Beispiel der FIG 3 ist zum besseren Verständnis beispielhaft vorgesehen, das Abtasten 300 des Parameterraums in Übereinstimmung mit einem regelmäßigen, in der jeweiligen Dimension äquidistantem Raster durchzuführen, das zu einer Vielzahl von Kombinationen / Tupel 303 aus Anpressdruck 301 und Temperatur 302 führt. Mit anderen Worten wird der Parameterraum in Übereinstimmung mit einem sich darüber erstreckenden regelmäßigen Raster vollständig abgetastet.

An jedem Tupel 303 der zwei streuenden der Fertigungszustandsgrößen X erfolgt das weiter oben dargelegte simulative Bestimmen 202 in Abhängigkeit von den streuenden der Fertigungszustandsgrößen X. Jedes Tupel 303 repräsentiert somit einen separaten Simulationslauf.

Jeder separate Simulationslauf wird im Anschluss durchgeführt, sodass die Ausgangsgrößen X_{SIM} unter den Fertigungszustandsgrößen X in Abhängigkeit von den streuenden der Fertigungszustandsgrößen X vorliegen.

Vorteilhaft können so schnell und einfach Parametervariationen durchgeführt werden (z.B. Änderung der Prozesskräfte, leichte Geometrieänderung, kleine Variation der Materialeigenschaften) .

Ferner erlaubt es dieses weitgehend automatisierbare "Model Sampling", sehr viele Datensätze in vergleichsweise kurzer Zeit zu gewinnen. Zwar kann es sein, dass ein einzelner Simulationslauf mehrere Stunden in Anspruch nimmt, allerdings ist eine Parallelisierbarkeit der Simulationsläufe möglich, da die einzelnen Simulationsläufe in der Regel nicht voneinander abhängig sind.

Der am Ende eines jeden Simulationslaufs erzeugte Datensatz der Fertigungszustandsgrößen X lässt natürlich Rückschlüsse auf den Zusammenhang zwischen den Fertigungszustandsgrößen X und einer Produktgüte Q zu und kann damit für den Erfahrungsaufbau des prädiktiven Modells 108 verwendet werden, ggf. noch bevor der Fertigungsverfahren in Betrieb genommen wurde. Damit wird die bisher sehr lange Anlernzeit für das prädiktive Modell 108 zumindest stark reduziert.

Darüber hinaus kann dieser virtuelle Datensatz natürlich um real sehr selten auftretende Parametersätze problemlos ergänzt werden und es können eventuell Qualitätsmaße mit zur Erstellung des Prädiktionsmodells verwendet werden, die real nicht verfügbar sind. Beispielsweise kann die Spannung oder Temperatur in der Mitte eines Bauteils ausgewertet werden, was real nicht messbar wäre aber durchaus eine entscheidende Aussage über die Bauteilqualität zulässt.

Das Abtasten 300 kann ein Ausführen einer Methode einer statistischen Versuchsplanung umfassen.

Alternativen zu dem in FIG 3 dargestellten regelmäßigen Raster ergeben sich aus der statistischen Versuchsplanung.

Die Methode der statistischen Versuchsplanung kann eine Monte Carlo-Abtastung und/oder eine Latin-Hypercube-Abtastung umfassen.

Unter statistischer Versuchsplanung können solche statistische Verfahren verstanden werden, die vor Versuchsbeginn angewendet werden, um im Sinne bestimmter Genauigkeitsvorgaben Versuchspläne zu bestimmen.

Insbesondere soll mit möglichst wenigen Versuchen (hier: Simulationsläufen) ein Wirkzusammenhang zwischen den - insbesondere streuenden - Eingangsgrößen und den Zielgrößen unter den Fertigungszustandsgrößen X genau genug erfasst werden.

Bei der Monte-Carlo-Abtastung wird der Parameterraum von einer vorgegebenen Anzahl zufällig und unabhängig voneinander ermittelter Tupel 303 abgetastet.

Bei der Latin-Hypercube-Abtastung wird der Parameterraum in Übereinstimmung mit einem sich darüber erstreckenden regelmäßigen Raster von einer vorgegebenen Anzahl zufällig und unabhängig voneinander ermittelter Tupel 303 so abgetastet, dass jedes Tupel 303 das einzige in seiner Hyperebene, bzw. im 2D-Beispiel der FIG 3 das einzige an seiner vertikalen und/oder horizontalen Position ist.

FIG 4 zeigt schematisch eine Vorrichtung 400 zum Bestimmen einer aus einem Fertigungsverfahren hervorgehenden Produktgüte Q in Übereinstimmung mit Ausführungsbeispielen der Erfindung.

Die Vorrichtung 400 ist mehrgliedrig konzipiert:
Sie umfasst eine Simulationseinrichtung 402 zum simulativen Bestimmen 202 einer von mehreren Fertigungszustandsgrößen X in Abhängigkeit von einer streuenden der Fertigungszustandsgrößen X; eine Erfassungseinrichtung 404 zum sensorischen Erfassen 204 einer der Fertigungszustandsgrößen X; und
eine Bestimmungseinrichtung 408 zum assoziativen Bestimmen 208 der Produktgüte Q in Abhängigkeit von den Fertigungszustandsgrößen X.

Die Vorrichtung 400 kann ferner dazu eingerichtet sein, das Verfahren 200 in Übereinstimmung mit Ausführungsbeispielen der Erfindung durchzuführen.

Demzufolge sind die oben genannten Verfahrensmerkmale in der Vorrichtung analog nutzbar, wobei auch die jeweiligen Vorteile erzielt werden.

Wie in FIG 4 mit gestrichelten Linien angedeutet ist, kann die Vorrichtung in diesem Sinne insbesondere eine simulative Erfassungseinrichtung (einen "virtuellen Sensor") 406 zum simulativen Erfassen 206 einer sensorisch nicht erfassbaren X_{VSEN} der Fertigungszustandsgrößen X in Abhängigkeit von der sensorisch erfassten X_{SEN} der Fertigungszustandsgrößen X umfassen.

Funktion und Vorteile des virtuellen Sensors 406 entsprechen dabei jenen des Verfahrensschritts des simulativen Erfassens 206.

Ferner kann die Vorrichtung eine Separationseinrichtung zum Separieren des Produkts in Abhängigkeit von dessen bestimmter Produktgüte Q umfassen.

Mit anderen Worten ist es daher möglich, gefertigte Produkte mit nicht hinreichender Produktgüte Q anders zu behandeln als gefertigte Produkte mit hinreichender Produktgüte Q. Beispielsweise lassen sich separierte Produkte einer Nachbear-Leitung oder einem Recycling zuführen anstatt einer Lieferkette/-logistik.

## Patentansprüche

1. Verfahren (200) zum Bestimmen einer aus einem Fertigungsverfahren hervorgehenden Produktgüte (Q) basierend auf einem generierten prädiktiven Modell; umfassend:
ein simulatives Bestimmen (202) einer von mehreren Fertigungszustandsgrößen (X) in Abhängigkeit von einer streuenden der Fertigungszustandsgrößen (X);
ein sensorisches Erfassen (204) einer der Fertigungszustandsgrößen (X); und
ein assoziatives Bestimmen (208) der Produktgüte (Q) in Abhängigkeit von den durch simulatives Bestimmen und durchsensorisches Erfassen erhaltenen Fertigungszustandsgrößen (X) wobei diese Fertigungszustandsgrößen als Eingangsgrößen für das assoziative Bestimmen (208) dienen,
wobei das assoziative Bestimmen (208) ein Ausführen einer Methode eines maschinellen Lernens umfasst, und wobei durch assoziatives Bestimmen die Gesamtheit aller bestimmten oder erfassten Fertigungszustandsgrößen (X) auf Grundlage des prädiktiven Modells (108, 408) mit einer Produktgüte Q des gefertigten Produkts verbunden bzw. verknüpft wird,
Bereitstellen des prädiktiven Modells (108), welches aufgrund von Fertigungszustandsgrößen eine Aussage über eine Produktgüte machen kann.

2. Verfahren (200) nach Anspruch 1,
wobei das simulative Bestimmen (202) ein Ausführen einer Systemsimulation des Fertigungsverfahrens umfasst.

3. Verfahren (200) nach Anspruch 2, ferner umfassend:
simulatives Erfassen (206) einer sensorisch nicht erfassbaren der Fertigungszustandsgrößen (X) in Abhängigkeit von der sensorisch erfassten der Fertigungszustandsgrößen (X).

4. Verfahren (200) nach Anspruch 3,
wobei das simulative Erfassen (206) ein Ausführen einer hinsichtlich einer Rechenkomplexität vereinfachten Instanz der Systemsimulation und/oder einer analytischen Gleichung umfasst.

5. Verfahren (200) nach einem der Ansprüche 2 - 4,
wobei die Systemsimulation in Abhängigkeit von der streuenden der Fertigungszustandsgrößen (X) parametrisiert ist.

6. Verfahren (200) nach einem der Ansprüche 2 - 5,
wobei die Systemsimulation eine kontinuierliche Simulation, eine eindimensionale Simulation und/oder eine analytische Gleichung umfasst.

7. Verfahren (200) nach Anspruch 6,
wobei die kontinuierliche Simulation eine Finite-Elemente-Methode, eine Methode der numerischen Strömungsmechanik und/oder eine Mehrkörpersimulation umfasst.

8. Verfahren (200) nach einem der vorhergehenden Ansprüche, wobei das simulative Bestimmen (202) ein Abtasten (300) eines Wertebereiches der streuenden der Fertigungszustandsgrößen (X) umfasst.

9. Verfahren (200) nach Anspruch 8,
wobei das Abtasten (300) ein Ausführen einer Methode einer statistischen Versuchsplanung umfasst.

10. Verfahren (200) nach Anspruch 9,
wobei die Methode der statistischen Versuchsplanung eine Monte Carlo-Abtastung und/oder eine Latin-Hypercube-Abtastung umfasst.

11. Verfahren (200) nach Anspruch 1,
wobei die Methode des maschinellen Lernens einen Entscheidungsbaum und/oder ein künstliches neuronales Netz umfasst.

12. Vorrichtung (400) zum Bestimmen einer aus einem Fertigungsverfahren hervorgehenden Produktgüte (Q) basierend auf einem generierten prädiktiven Modell; umfassend:
eine Simulationseinrichtung (402) zum simulativen Bestimmen (202) einer von mehreren Fertigungszustandsgrößen (X) in Abhängigkeit von einer streuenden der Fertigungszustandsgrößen (X);
eine Erfassungseinrichtung (404) zum sensorischen Erfassen (204) einer der Fertigungszustandsgrößen (X); und
eine Bestimmungseinrichtung (408) zum assoziativen Bestimmen (208) der Produktgüte (Q) in Abhängigkeit von
durch simulatives Bestimmen und durchsensorisches Erfassen erhaltenen Fertigungszustandsgrößen (X) wobei diese Fertigungszustandsgrößen als Eingangsgrößen für das assoziative Bestimmen (208) dienen, wobei das assoziative Bestimmen (208) ein Ausführen einer Methode eines maschinellen Lernens umfasst, und
wobei durch assoziatives Bestimmen die Gesamtheit aller bestimmten oder erfassten Fertigungszustandsgrößen (X) auf Grundlage des prädiktiven Modells (108, 408) mit einer Produktgüte Q des gefertigten Produkts verbunden bzw. verknüpft wird,
wobei die Vorrichtung dazu eingerichtet ist, das prädiktive Modell (108) zu erstellen, welches aufgrund von Fertigungszustandsgrößen eine Aussage über eine Produktgüte machen kann.

13. Vorrichtung (400) nach Anspruch 12,
wobei die Vorrichtung (400) ferner dazu eingerichtet ist, das Verfahren (200) nach einem der Ansprüche 2 - 11 durchzuführen.

## Claims

1. Method (200) for determining a product quality (Q) that results from a manufacturing method based on a generated predictive model; comprising:
a simulative determination (202) of one of multiple manufacturing state variables (X) as a function of a scattering manufacturing state variable of the manufacturing state variables (X);
a sensory detection (204) of one of the manufacturing state variables (X); and
an associative determination (208) of the product quality (Q) as a function of the manufacturing state variables (X) obtained through simulative determination and through sensory detection, wherein these manufacturing state variables are used as input variables for the associative determination (208),
wherein the associative determination (208) comprises performing a machine learning method, and wherein through associative determination the total of all determined or recorded manufacturing state variables (X) are connected or linked to a product quality Q of the manufactured product on the basis of the predictive model (108, 408),
provision of the predictive model (108), which is able to make a statement regarding a product quality on the basis of manufacturing state variables.

2. Method (200) according to claim 1,
wherein the simulative determination (202) comprises performing a system simulation of the manufacturing method.

3. Method (200) according to claim 2, moreover comprising:
simulative detection (206) of one manufacturing state variable that cannot be detected in a sensory manner of the manufacturing state variables (X) as a function of the manufacturing state variable that is detected in a sensory manner of the manufacturing state variables (X).

4. Method (200) according to claim 3,
wherein the simulative detection (206) comprises executing an instance of the system simulation, said instance being simplified in terms of computational complexity, and/or an analytical equation.

5. Method (200) according to one of claims 2 - 4,
wherein the system simulation is parameterised as a function of the scattering manufacturing state variable of the manufacturing state variables (X).

6. Method (200) according to one of claims 2 - 5,
wherein the system simulation comprises a continuous simulation, a one-dimensional simulation and/or an analytical equation.

7. Method (200) according to claim 6,
wherein the continuous simulation comprises a finite element method, a computational fluid dynamics method and/or a multi-body simulation.

8. Method (200) according to one of the preceding claims, wherein the simulative determination (202) comprises sampling (300) a value range of the scattering manufacturing state variables of the manufacturing state variables (X).

9. Method (200) according to claim 8,
wherein sampling (300) comprises performing a statistical experimental design method.

10. Method (200) according to claim 9,
wherein the statistical experimental design method comprises Monte Carlo sampling and/or Latin Hypercube sampling.

11. Method (200) according to claim 1,
wherein the machine learning method comprises a decision tree and/or an artificial neural network.

12. Apparatus (400) for determining a product quality (Q) that results from a manufacturing method based on a generated predictive model; comprising:
a simulation facility (402) for the simulative determination (202) of one of multiple manufacturing state variables (X) as a function of a scattering manufacturing state variable of the manufacturing state variables (X);
a detection facility (404) for the sensory detection (204) of one of the manufacturing state variables (X); and
a determination facility (408) for the associative determination (208) of the product quality (Q) as a function of
manufacturing state variables (X) obtained through simulative determination and through sensory detection, wherein these manufacturing state variables are used as input variables for the associative determination (208), wherein the associative determination (208) comprises performing a machine learning method, and
wherein through associative determination the total of all determined or recorded manufacturing state variables (X) are connected or linked to a product quality Q of the manufactured product on the basis of the predictive model (108, 408),
wherein the apparatus is configured so as to create the predictive model (108), which is able to make a statement regarding a product quality on the basis of manufacturing state variables.

13. Apparatus (400) according to claim 12,
wherein moreover the apparatus (400) is configured so as to perform the method (200) according to one of claims 2 - 11.

## Revendications

1. Procédé (200) de détermination d'une qualité (Q) de produit provenant d'un procédé de fabrication sur la base d'un modèle prédictif créé ; comprenant :
une détermination (202) simulative de l'une de plusieurs grandeurs (X) d'état de fabrication en fonction d'une grandeur de dispersion des grandeurs (X) d'état de fabrication ;
une détection (204) par capteur de l'une des grandeurs (X) d'état de fabrication ; et
une détermination (208) associative de la qualité (Q) du produit en fonction des grandeurs (X) d'état de fabrication déterminées simulativement et obtenues par la détection par capteur, dans lequel ces grandeurs d'état de fabrication servent de grandeurs d'entrée pour la détermination (208) associative,
dans lequel la détermination (208) associative comprend une exécution d'un procédé d'un apprentissage automatique, et dans lequel, par la détermination associative, on relie ou on combine l'ensemble de toutes les grandeurs (X) d'état de fabrication déterminées ou détectées sur la base du modèle (108, 408) prédictif à une qualité Q du produit fabriqué,
mise à disposition du modèle (108) prédictif, qui permet de faire une prédiction sur une qualité du produit sur la base des grandeurs d'état de fabrication.

2. Procédé (200) suivant la revendication 1,
dans lequel la détermination (202) simulative comprend l'exécution d'une simulation de système du procédé de fabrication.

3. Procédé (200) suivant la revendication 2, comprenant en outre :
détection (206) simulative de l'une des grandeurs (X) d'état de fabrication, qui ne peuvent pas être détectées par capteur, en fonction de celle détectées par capteur des grandeurs (X) d'état de fabrication.

4. Procédé (200) suivant la revendication 3,
dans lequel la détection (206) simulative comprend une exécution d'une instance, simplifiée du point de vue de la complexité des calculs, de la simulation de système et/ou d'une équation analytique.

5. Procédé (200) suivant l'une des revendications 2 à 4,
dans lequel la simulation du système est paramétrée en fonction des grandeurs de dispersion des grandeurs (X) d'état de fabrication.

6. Procédé (200) suivant l'une des revendications 2 à 5,
dans lequel la simulation de système comprend une simulation continue, une simulation à une seule dimension et/ou une équation analytique.

7. Procédé (200) suivant la revendication 6,
dans lequel la simulation continue comprend une méthode aux éléments finis, une méthode de la mécanique des fluides numérique et/ou une simulation à plusieurs corps.

8. Procédé (200) suivant l'une des revendications précédentes, dans lequel la détermination (202) simulative comprend un échantillonnage (300) d'une plage de mesure des grandeurs de dispersion des grandeurs (X) d'état de fabrication.

9. Procédé (200) suivant la revendication 8,
dans lequel le échantillonnage (300) comprend l'exécution d'une méthode d'une planification d'essais statistiques.

10. Procédé (200) suivant la revendication 9,
dans lequel la méthode de la planification d'essais statistiques comprend un échantillonnage de Monté Carlo et/ou un échantillonnage latin hypercube.

11. Procédé (200) suivant la revendication 1,
dans lequel la méthode d'apprentissage automatique comprend un arbre de décision et/ou un réseau neuronal artificiel.

12. Dispositif (400) de détermination de la qualité (Q) d'un produit provenant d'un procédé de fabrication reposant sur un modèle prédictif créé ; comprenant :
un dispositif (402) de simulation pour la détermination (202) simulative de l'une de plusieurs grandeurs (X) d'état de fabrication en fonction d'une grandeur de dispersion des grandeurs (X) d'état de fabrication ;
un dispositif (404) de détection pour la détection (204) par capteur de l'une des grandeurs (X) d'état de fabrication et
un dispositif (408) de détermination pour la détermination (208) associative de la qualité (Q) du produit
en fonction des grandeurs (X) d'état de fabrication déterminées simulativement et obtenues par la détection par capteur, dans lequel ces grandeurs d'état de fabrication servent de grandeurs d'entrée pour la détermination (208) associative, dans lequel la détermination (208) association comprend l'exécution d'une méthode d'apprentissage automatique, et
dans lequel la détermination associative comprend une exécution d'un procédé d'un apprentissage automatique, et dans lequel, par la détermination associative, on relie ou on combine l'ensemble de toutes les grandeurs (X) d'état de fabrication déterminées ou détectées, sur la base du modèle (108, 408), prédictif à une qualité Q du produit fabriqué,
dans lequel le dispositif est agencé pour établir le modèle (108) prédictif, qui rend possible une prédiction sur une qualité du produit sur la base de grandeurs d'état de fabrication.

13. Dispositif (400) suivant la revendication 12,
dans lequel le dispositif (400) est agencé en outre pour effectuer le procédé (200) suivant l'une des revendications 2 à 11.
